# FASCICULE DE BREVET EUROPEEN

(11) **EP 0 677 154 B1**
(45) Date de publication et mention de la délivrance du brevet: **22.12.1999**
(21) Numéro de dépôt: 94928419.4
(22) Date de dépôt: 20.09.1994
(51) Int. Cl.: F16D 25/08

(54) **EMBRAYAGE DE VEHICULE AUTOMOBILE DU TYPE TIRE ET A ACTIONNEMENT HYDRAULIQUE**
GEZOGENE HYDRAULISCHE KRAFTFAHRZEUGKUPPLUNG
PULL-TYPE HYDRAULIC MOTOR VEHICLE CLUTCH

(30) Priorité: 29.09.1993 FR 9311574
(43) Date de publication de la demande: 18.10.1995
(73) Titulaire: VALEO, 75017 Paris (FR)
(72) Inventeur: VILLATA, Gino, I-14021 Buttigliera D'Asti (IT)
(74) Mandataire: Gamonal, Didier
(86) Numéro de dépôt international: FR9401096
(87) Numéro de publication internationale: WO9509313

(56) Documents cités:
- EP-A- 0 095 841
- DE-A- 2 815 971
- FR-A- 2 674 922

## Description

La présente invention concerne un embrayage à friction, notamment pour véhicule automobile.

L'invention concerne plus particulièrement un embrayage du type tiré dont un exemple de réalisation est décrit et représenté dans les documents FR-A-2 304 826, FR-2 653 195 (US-A-5,113,989), DE-A-28 15 971.

Un tel type d'embrayage comporte un disque de friction solidarisé en rotation de manière débrayable à un arbre d'entraînement en rotation (le vilebrequin du moteur dans le cas d'un véhicule automobile), un organe de commande propre à commander le débrayage du disque de friction avec l'arbre d'entraînement lorsqu'il est l'objet d'un effort de traction axiale, et une butée de débrayage qui est susceptible d'agir axialement en traction sur l'organe de commande de l'embrayage.

Un tel embrayage, comme cela est illustré dans le document FR-A-2.304.826, peut être du type à commande mécanique, c'est-à-dire du type comportant une fourchette de commande du débrayage qui est réalisée sous la forme d'un levier articulé sur le carter d'embrayage et dont l'extrémité interne agit axialement sur un manchon coulissant dont une extrémité est liée axialement par exemple à la bague extérieure du roulement appartenant à la butée de débrayage.

Comme cela est expliqué dans ce document, l'utilisation de la fourchette de commande mécanique du débrayage, dans un sens opposé à celui permettant d'assurer le débrayage, permet, lors de l'assemblage du groupe motopropulseur, d'assurer la solidarisation en traction axiale entre un élément lié à la bague intérieure du roulement de la butée de débrayage et une pièce agissant sur un diaphragme ou des leviers de débrayage, cette solidarisation étant assurée par un effet d'emboîtement élastique également appelé clipsage.

On connaît également différentes conceptions d'un embrayage qui comportent un dispositif hydraulique d'actionnement comportant au moins un piston d'actionnement dont une extrémité agit sur la butée de débrayage pour solliciter axialement ladite butée dans un premier sens pour provoquer le débrayage lorsque le dispositif hydraulique d'actionnement est alimenté en fluide provenant d'une source de fluide sous pression, telle que par exemple un cylindre émetteur d'embrayage.

Un exemple d'un tel embrayage à actionnement hydraulique est décrit et représenté dans le document US-A-3,955,660 dans lequel le piston d'actionnement est réalisé sous la forme d'un manchon cylindrique monté coulissant sur une portée cylindrique de guidage fixée au carter d'embrayage.

Un tel type d'embrayage à actionnement hydraulique qui ne comporte plus de fourchette mécanique d'actionnement de la butée de débrayage ne permet pas de réaliser la solidarisation initiale, par emboîtement élastique, entre l'organe de sortie de la butée de débrayage et l'organe agissant sur le plateau de pression.

Un tel type d'embrayage présente également d'autres inconvénients parmi lesquels ceux liés à l'alimentation en fluide sous pression de la chambre d'actionnement du piston hydraulique qui nécessite de faire appel à au moins une conduite d'alimentation en fluide sous pression qui s'étend à l'intérieur du carter d'embrayage, qui doit être reliée hydrauliquement à la chambre d'actionnement et à la source de fluide sous pression et pour la bonne résistance de laquelle il est en général nécessaire de prévoir des moyens d'immobilisation en rotation du piston d'actionnement.

De tels moyens sont décrits dans le document DE-A-28 15 971. Dans celui-ci le dispositif hydraulique d'actionnement comporte également un levier mécanique avec un corps, une première extrémité liée en translation axiale au piston et articulée sur ce dernier autour d'un axe d'articulation perpendiculaire à l'axe de coulissement axial du piston, une seconde extrémité, ledit levier traversant un trou cylindrique de la paroi du carter.

En pratique c'est la seconde extrémité du levier qui traverse la paroi du carter en affleurant celle-ci.

Avec ce type de réalisation il n'est pas possible de réaliser la solidarisation initiale, par emboîtement élastique, entre l'organe de sortie de la butée de débrayage et l'organe agissant sur le plateau de pression.

La présente invention a pour but de proposer une nouvelle conception d'un embrayage du type tiré à actionnement hydraulique qui remédie aux inconvénients qui viennent d'être mentionnés.

Suivant l'invention un embrayage à friction du type tiré comprenant un levier du type sus-indiqué est caractérisé en ce que le corps du levier mécanique traverse une ouverture oblongue formée dans la paroi du carter, en ce que la seconde extrémité du levier mécanique fait saillie à l'extérieur du carter pour permettre de solliciter axialement la butée de débrayage dans un second sens opposé au premier sens par l'intermédiaire du piston en sorte que ledit levier mécanique est un levier d'actionnement.

Avantageusement la seconde extrémité du levier d'actionnement est profilée pour coopération avec un outil.

Par exemple, cette seconde extrémité consiste en un téton dans lequel pénètre, de manière complémentaire, un outil creux.

Grâce à ces dispositions, il est possible de provoquer un déplacement axial du piston dans son second sens pour procéder à l'encliquetage de la butée de débrayage sur sa pièce d'accostage associée.

En fonctionnement normal ce levier ne gêne pas le déplacement de la butée car l'ouverture du carter est de forme oblongue, la dimension de ladite ouverture étant fonction du déplacement du piston.

Selon d'autres caractéristiques de l'invention :
- l'axe d'articulation du levier est décalé radialement par rapport à l'axe du piston ;
- la première extrémité du levier est en forme de fourchette ;
- le corps du levier traverse une fenêtre formée dans la paroi du carter et la seconde extrémité du levier fait saillie à l'extérieur du carter ;
- le dispositif hydraulique d'actionnement comporte un circuit d'alimentation en fluide sous pression comportant au moins une conduite d'alimentation qui relie la chambre d'actionnement du piston à une source de fluide sous pression agencée à l'extérieur du carter, au moins une partie de la conduite étant formée dans le corps du levier ;
- le corps du levier comporte un canal longitudinal dont une première extrémité est reliée à la chambre d'actionnement du piston à travers des moyens d'articulation de ladite première extrémité du levier sur le piston ;
- la seconde extrémité du canal débouche à l'extérieur du carter d'embrayage ;
- le circuit d'alimentation comporte une conduite de purge dont au moins une partie est formée dans le corps du levier.

La conduite de purge est associée à une vis de purge. Ainsi on peut effectuer la purge à l'extérieur du carter en un lieu accessible. Bien entendu la vis de purge peut être disposée en un autre endroit du levier ou à l'extérieur de celui-ci.

On notera que le décalage radial de l'axe d'articulation du levier par rapport à l'axe du piston permet une alimentation aisée de la chambre d'actionnement par l'intermédiaire du levier, ainsi que de purger aisément le circuit d'alimentation.

D'autres caractéristiques et avantages de l'invention apparaîtront à la lecture de la description détaillée qui va suivre pour la compréhension de laquelle on se reportera aux dessins annexés dans lesquels :
- La figure 1 est une vue partielle schématique en section axiale illustrant une partie d'un carter d'embrayage et le dispositif d'actionnement de la butée de débrayage réalisé conformément aux enseignements de l'invention ;
- la figure 2 est une vue en section selon la ligne 2-2 de la figure 1 ;
- la figure 3 est une vue de détail à plus grande échelle d'une partie de la figure 2 ; et
- la figure 4 est une vue de détail à plus grande échelle illustrant une variante de réalisation du dispositif illustré aux figures 1 à 3.

On a illustré sur les figures un carter d'embrayage 10 appartenant à un embrayage de véhicule automobile du type tiré et à actionnement hydraulique.

L'ensemble de l'embrayage n'est pas illustré sur les figures et ne sera pas décrit en détail et on pourra notamment se reporter aux documents cités précédemment pour en connaître divers exemples de réalisation.

Pour mémoire on notera que l'embrayage de véhicule automobile comporte usuellement un disque de friction, doté à sa périphérie externe de garnitures de friction, un plateau de réaction, un plateau de pression mobile axialement par rapport au plateau de réaction, un couvercle solidaire du plateau de réaction, et des moyens élastiques à action axiale prenant appui sur le couvercle et sur le plateau de pression pour serrer les garnitures de friction entre les plateaux de pression et de réaction, solidaires en rotation du vilebrequin du moteur, tandis que le disque de friction est calé en rotation sur l'arbre d'entrée de la boîte de vitesses.

Les moyens élastiques à action axiale appartiennent au dispositif débrayeur de l'embrayage et comportent soit un diaphragme comme dans le document FR-A-2 304 826, ou des ressorts à boudin associés à des leviers de débrayage comme dans le document US-A-3 995 660.

Pour mémoire on rappellera que dans un embrayage du type tiré à diaphragme, ledit diaphragme prend appui par la partie périphérique externe de sa rondelle Belleville sur le couvercle et par la périphérie interne de sa dite rondelle Belleville sur un bossage d'appui, usuellement fractionné, du plateau de pression.

Une pièce d'accostage est associée aux leviers de débrayage ou au diaphragme et pour désengager, ou débrayer, l'embrayage il faut agir en traction sur la pièce d'accostage à l'aide d'une butée de débrayage attelée à la pièce d'accostage.

L'actionnement de la butée est réalisé à l'aide d'un dispositif d'actionnement hydraulique comprenant, de manière décrite ci-après, un piston 26,34 mobile axialement, un organe de guidage 16 fixe axialement, une chambre hydraulique d'actionnement 38 du piston délimitée par l'organe de guidage 16 et ledit piston et un circuit d'alimentation en fluide sous pression comprenant au moins une conduite d'alimentation qui relie la chambre d'actionnement du piston à une source de pression, par exemple un cylindrique émetteur d'embrayage, soumis à l'action de la pédale de débrayage.

La source de pression est agencée, de manière connue en soi, à l'extérieur du carter 10. Ce carter 10 est en forme générale de cloche et présente une paroi radiale d'extrémité 12 sur la surface interne 14 de laquelle est fixée axialement et en rotation une douille 16, également appelée trompette, qui délimite une surface externe de portée cylindrique 18 d'axe X-X.

Le carter 10 renferme notamment une butée de débrayage 20 qui est constituée pour l'essentiel par un roulement à billes 22 dont la bague extérieure 24 est liée, ici par sertissage, en translation axiale à un manchon d'actionnement 26 et dont la bague intérieure 28 tournante se prolonge par une douille 30 comportant notamment une gorge radiale extérieure 32 prévue pour recevoir des moyens de solidarisation en traction agissant par emboîtement axial élastique (non représentés) sur la pièce d'accostage de l'embrayage (non représenté) et donc sur le diaphragme ou les leviers de débrayage. Pour plus de précision on se reportera aux documents FR-A-2 304 826 et FR-A-2 653 195 (US-A-5,113,989), les moyens de solidarisation en traction comportant usuellement un organe de couplage élastiquement déformable radialement, tel qu'un jonc, logé dans la gorge 32 et venant en prise avec une portée de la pièce d'accostage.

L'actionnement de la butée de débrayage 20 est réalisé au moyen d'un dispositif d'actionnement hydraulique constitué par un piston d'actionnement formé par le corps cylindrique creux 34 du manchon 26 dont la surface cylindrique interne 36 coopère à l'arrière du manchon avec la portée cylindrique 18 pour délimiter une chambre hydraulique d'actionnement 38. La douille 16 constitue ainsi un organe de guidage pour le piston 26,34 et est en relation de cylindre piston avec ledit piston 26,34.

On notera que le piston 26,34 est susceptible de solliciter axialement la butée de débrayage 20, ledit piston présentant de manière précitée une extrémité qui agit sur la butée de débrayage 20.

Cette butée 20 est liée en translation axiale au piston en étant attelée à celui-ci.

Dans les figures illustrées l'attelage est réalisé par sertissage mais en variante comme décrit dans le document DE-A-28 15 971, cet attelage peut être réalisé par emmanchement à force de la bague extérieure 24 de la butée 20 sur l'extrémité associée du piston 26,34, ladite extrémité étant alors épaulée.

Bien entendu comme décrit dans le document FR-A-2 304 826, on peut inverser les structures, la bague intérieure de la butée 20 étant alors liée axialement au piston 26,34, tandis que la bague extérieure de la butée 20 est tournante en étant attelée par emboîtement axial à la pièce d'accostage.

Plus précisément la chambre hydraulique d'actionnement 38 est délimitée axialement par deux coupelles d'étanchéité 40 et 42 portées respectivement par le piston 26, 34 et par la trompette 16. Pour ce faire le piston 26,34 comporte à son extrémité arrière une collerette dirigée vers l'axe de l'ensemble, tandis que la douille 16 porte à son extrémité avant une bague calée axialement par un circlips.

Les coupelles 40,42, sous forme de joints à lèvre, prennent appui respectivement sur la collerette et sur la bague, avec interposition d'un ressort de précharge sollicitant la butée 20 et le piston 26,34 en direction de la paroi 12 pour exercer une précharge sur l'embrayage et favoriser, de manière connue en soi, un bon fonctionnement du roulement de la butée 20.

Un soufflet de protection intervient entre les extrémités arrière du piston 26,34 et de la douille 16.

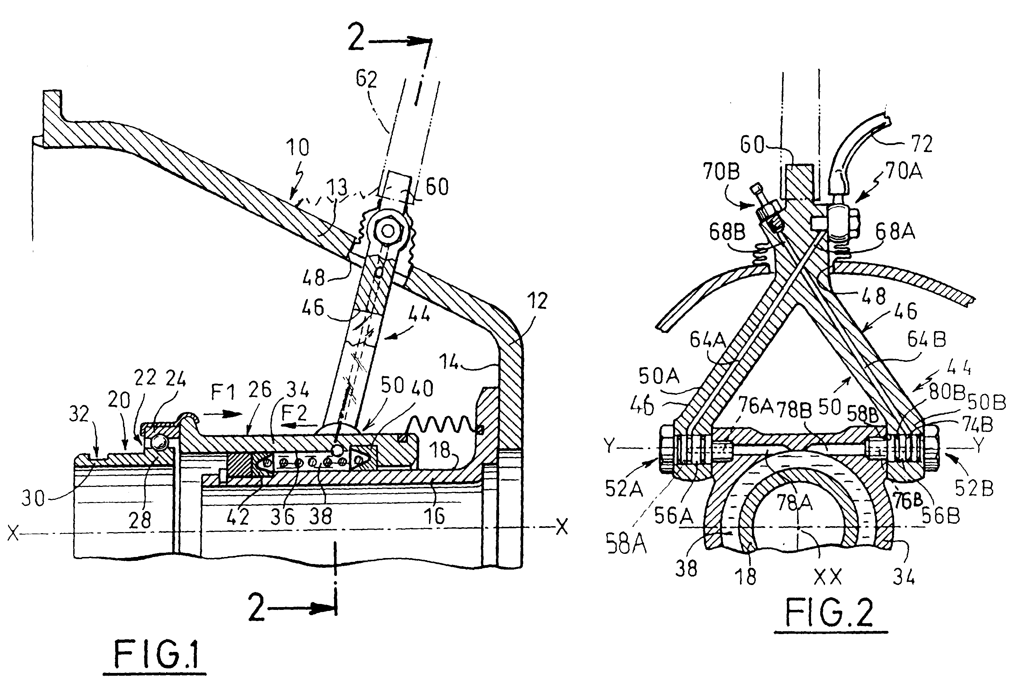

Lorsque la chambre d'actionnement 38 est alimentée en fluide sous pression, par des moyens qui seront décrits par la suite, il se produit un déplacement axial du piston 26,34 selon la direction X-X et dans le sens F1, de la gauche vers la droite en considérant la figure 1, de manière à provoquer un débrayage de l'embrayage par l'intermédiaire de la butée de débrayage 20 se déplaçant axialement.

Conformément à l'invention, il est prévu un levier 44 permettant de déplacer axialement le piston 26,34 et la butée de débrayage 20 dans le sens opposé indiqué par la flèche F2, c'est-à-dire de la droite vers la gauche en considérant la figure 1 pour assembler la butée de débrayage à sa pièce d'accostage, comme dans le document FR-A-2 304 826. Ce levier s'étend en partie à l'extérieur du carter 10.

Plus précisément, selon l'invention, le levier 44 comporte un corps de levier 46 qui traverse la portion conique 13 de la paroi du carter d'embrayage 10 à travers un trou de forme oblongue 48 ici en forme de fenêtre à section rectangulaire dont la longueur s'étend axialement parallèlement à l'axe X-X.

L'extrémité inférieure 50 du levier 44, située à l'intérieur du carter d'embrayage 10, est réalisée ici sous la forme d'une fourchette comportant deux bras 50A et 50B, qui sont reliés au corps 34 du piston en forme de manchon 26.

A cet effet, chacune des branches 50A, 50B de l'extrémité en forme de fourchette 50 est traversée par une vis 52A, 52B d'articulation dont l'extrémité filetée est vissée dans la partie supérieure du manchon 34 et dont le corps 56A, 56B traverse un perçage correspondant 58A, 58B formé dans l'extrémité du bras de manière à constituer un axe d'articulation Y-Y du levier 44 sur le manchon 34, qui est décalé radialement vers l'extérieur par rapport à l'axe X-X de coulissement du piston 34.

La seconde extrémité 60 du levier 44 s'étend en saillie à l'extérieur du carter 10 de manière à pouvoir agir mécaniquement sur le levier 44, par exemple au moyen d'un outil 62 illustré en silhouette sur la figure 1 qui permet d'augmenter le bras de levier. Cette extrémité 60 est profilée en conséquence et consiste par exemple, en un téton dans lequel pénètre de manière complémentaire l'outil creux 62.

On comprend aisément qu'une action mécanique externe sur l'extrémité 60 du levier 44 permet, en le faisant pivoter, dans le sens horaire en considérant la figure 1, autour d'un point d'articulation résultant du contact de son corps 46 avec le bord correspondant de la fenêtre 48, de provoquer un déplacement axial du piston 26,34 selon la direction indiquée par la flèche F2.

Cette possibilité d'actionnement mécanique du piston 26, 34 est utilisée lors de l'assemblage de l'embrayage afin d'assurer la solidarisation axiale de la bague intérieure 28, 30 avec la pièce d'accostage, et ceci selon une technique d'emboîtement axial telle que celle décrite et représentée dans le document FR-A-2.304.826.

Conformément à un autre aspect de l'invention, le levier 44 intègre une partie du circuit d'alimentation en fluide sous pression du piston 26, 34. Ceci est rendu possible grâce au fait que la seconde extrémité du levier 60 fait saillie à l'extérieur du carter 10 ainsi que le corps 46, en sorte qu'il est aisé de réaliser des branchements.

A cet effet, la branche 50A comporte un canal 64A d'alimentation en fluide sous pression dont une extrémité interne 66A est reliée à la chambre d'actionnement 38 et dont l'extrémité externe 68A est reliée, par un raccord 70A à une conduite de fluide sous pression 72 qui est elle-même reliée à un cylindre émetteur d'embrayage (non représenté).

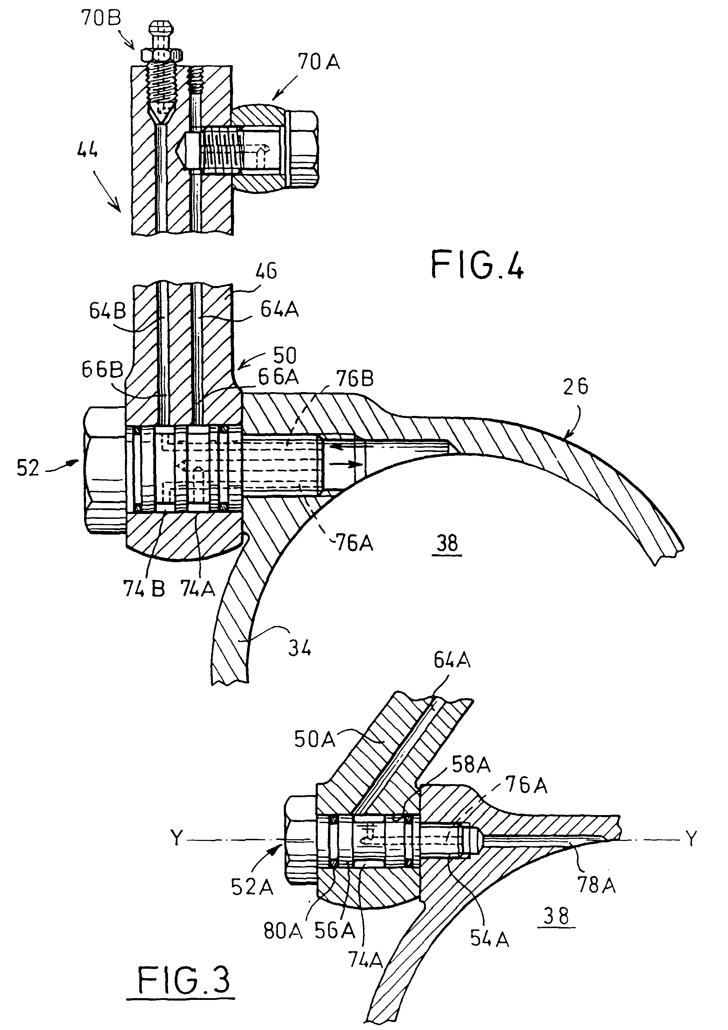

Le raccordement hydraulique de l'extrémité 66A du canal 64A est illustré en détail sur la figure 3 sur laquelle on voit qu'elle débouche dans une gorge radiale 74A du corps lisse de la vis 52A formant axe d'articulation, la gorge 74A étant elle-même reliée à un passage axial 76A formé dans la vis qui débouche dans un canal coaxial 78A formé dans le corps 34 du piston et qui débouche dans la chambre d'actionnement 38.

L'étanchéité du raccordement est assurée au moyen de deux joints toriques 80A.

La seconde branche 50B de l'extrémité inférieure 50 en forme de fourchette du levier 44 comporte également un canal longitudinal de purge 64B dont l'extrémité supérieure 68B est reliée à une vis de purge 70B et dont l'extrémité inférieure est reliée à la chambre 38 par un agencement identique à celui de l'extrémité intérieure 66A du canal d'alimentation 64A.

Grâce à cet aspect de l'invention, il ne subsiste plus de conduite souple à l'intérieur du carter d'embrayage et l'immobilisation en rotation du piston 26, 34 est également assurée par l'intermédiaire du levier d'actionnement mécanique 44 traversant pour ce faire la fenêtre 48 du carter 10 avec jeu dans le plan de la figure 1, pour déplacement axial du piston 26 et de la butée 20, et avec un jeu réduit dans le plan de la figure 2, pour blocage en rotation du piston 26.

Ainsi le corps 46 du levier 44 traverse parallèlement à l'axe X-X (dans le sens axial) avec jeu axial la fenêtre 48 et avec un jeu réduit dans l'autre sens. Le jeu axial ne perturbe pas le déplacement du piston 26 en fonctionnement normal.

Bien entendu l'ouverture 48 peut être axialement oblongue (parallèlement à l'axe X-X) en ayant des extrémités arrondies.

Bien entendu on peut revêtir les bords de la fenêtre 48 de matière plastique, par exemple à faible coefficient de frottement, pour réduire les bruits et les frottements.

On décrira maintenant la variante de réalisation illustrée à la figure 4 sur laquelle des composants identiques ou similaires à ceux du mode de réalisation illustré aux figures 1 à 3 sont désignés par les mêmes chiffres de référence.

Dans ce mode de réalisation, le levier 44 comporte un corps 46 qui se termine à son extrémité intérieure 50 sous la forme d'un seul bras qui s'étend latéralement d'un côté du corps en forme de manchon 34 du piston 26.

Comme précédemment l'axe d'articulation Y-Y du levier 44 est décalé radialement par rapport à l'axe X-X du piston 34.

Le corps 46 et le bras unique 50 comportent les canaux d'alimentation 64A et de purge 64B qui débouchent tous les deux en regard de gorges radiales 74A, 74B formées dans le corps de la vis unique d'articulation 52.

On appréciera que les coupelles 40,42 soient ménagées grâce au blocage en rotation du piston 26,34 à l'aide du levier 44.

Bien entendu le ressort de précharge, comme visible en pointillés à la figure 1, au lieu d'agir entre les coupelles 40,42, peut agir entre l'extrémité 60 du levier et le carter.

Outre un bon fonctionnement du roulement de la butée 20, cette disposition évite des vibrations au niveau du levier 44. Bien entendu on prévoit des soufflets de protection (figure 1) entre la fenêtre 48 et l'extrémité 60 du levier 44. La vis de purge peut être implantée sur le piston 26 ou en un autre endroit du levier 44.

Enfin l'axe d'articulation du levier 44 peut ne pas être décalé radialement par rapport à l'axe du piston. Néanmoins, cette disposition est moins favorable car elle rallonge la longueur de la conduite d'alimentation réalisée dans le levier 44. En outre il est plus difficile de purger le circuit d'alimentation.

Ainsi qu'on l'aura compris c'est la raison pour laquelle on a dans les figures 1 à 4 implantés les vis d'articulation 52,52A,52B dans la partie haute du piston 26,34 et de la chambre 38.

## Revendications

1. Embrayage à friction du type tiré, notamment pour véhicules automobiles, comportant un carter d'embrayage (10) à l'intérieur duquel est agencé un dispositif (20) de commande du débrayage qui comporte, d'une première part, une butée de débrayage (20), d'une deuxième part, un dispositif hydraulique d'actionnement (26, 34) comportant au moins un piston d'actionnement, dont une extrémité agit sur la butée de débrayage (20) pour solliciter axialement ladite butée (20) dans un premier sens (Fl) pour provoquer le débrayage lorsque le dispositif hydraulique d'actionnement est alimenté en fluide sous pression et, d'une troisième part, un levier mécanique (44) avec un corps (46), une première extrémité (50) liée en translation axiale au piston (26,34) et articulée sur ce dernier autour d'un axe d'articulation (Y-Y) perpendiculaire à l'axe (X-X) de coulissement axial du piston (26,34), une seconde extrémité (60), ledit levier (44) traversant la paroi (13) du carter (10), caractérisé en ce que le corps (46) du levier mécanique (44) traverse une ouverture oblongue (48) formée dans la paroi du carter (10), en ce que la seconde extrémité (60) du levier mécanique fait saillie à l'extérieur du carter pour permettre de solliciter axialement la butée de débrayage (20) dans un second sens (F2) opposé au premier sens (F1) par l'intermédiaire du piston (26,34), en sorte que ledit levier mécanique (44) est un levier d'actionnement.

2. Embrayage selon la revendication 1, caractérisé en ce que la seconde extrémité (60) est profilée pour coopération avec un outil (62).

3. Embrayage selon la revendication 1, caractérisé en ce que le corps (46) du levier (44) traverse l'ouverture oblongue (48) du carter (10) avec jeu dans le sens axial parallèlement à l'axe (X-X) de coulissement axial du piston (26,34) pour déplacement axial du piston (26) et de la butée (20), et avec un jeu réduit dans l'autre sens pour blocage en rotation du piston (26).

4. Embrayage selon la revendication 1, caractérisé en ce que l'axe d'articulation (Y-Y) du levier (44) est décalé radialement par rapport à l'axe (X-X) du piston (26, 34).

5. Embrayage selon la revendication 1, caractérisé en ce que la première extrémité (50) du levier est en forme de fourchette (50A, 50B).

6. Embrayage selon la revendication 1, caractérisé en ce que la première extrémité (50) du levier comporte un seul bras qui s'étend d'un côté du piston (26).

7. Embrayage selon la revendication 1, caractérisé en ce que le dispositif hydraulique d'actionnement comporte un circuit d'alimentation en fluide sous pression comportant au moins une conduite d'alimentation qui relie la chambre d'actionnement (38) du piston (26, 34) à une source de fluide sous pression agencée à l'extérieur du carter (10), et en ce qu'au moins une partie (64A) de ladite conduite est formée dans le corps (46) du levier (44).

8. Embrayage selon la revendication 7, caractérisé en ce que le corps du levier comporte un canal longitudinal (64A) dont une première extrémité (66A) est reliée à la chambre (38) d'actionnement du piston (26, 34) à travers des moyens (52A) d'articulation de ladite première extrémité (50A) du levier (44) sur le piston (26, 34).

9. Embrayage selon la revendication 8, caractérisé en ce que la seconde extrémité (68A) du canal (64A) débouche à l'extérieur du carter d'embrayage (10).

10. Embrayage selon la revendication 7, caractérisé en ce que le circuit d'alimentation comporte une conduite de purge (64B) dont au moins une partie est formée dans le corps (46) du levier (44).

## Patentansprüche

1. Reibungskupplung in gezogener Konstruktion, insbesondere für Kraftfahrzeuge, umfassend ein Kupplungsgehäuse (10), in dessen Innern eine Vorrichtung (20) zur Ausrückbetätigung angeordnet ist, die erstens ein Ausrücklager (20), zweitens eine hydraulische Betätigungsvorrichtung (26, 34), umfassend wenigstens einen Betätigungskolben, von dem ein Ende auf das Ausrücklager (20) einwirkt, um das besagte Ausrücklager (20) axial in einer ersten Richtung (F1) zu beaufschlagen, um das Ausrücken zu bewirken, wenn der hydraulischen Betätigungsvorrichtung Druckflüssigkeit zugeführt wird, und drittens einen mechanischen Hebel (44) mit einem Körper (46), einem axial geradlinig verschiebbar mit dem Kolben (26, 34) verbundenen und an diesem um eine zur axialen Verschiebungsachse (X-X) des Kolbens (26, 34) senkrechte Gelenkachse (Y-Y) angelenkten ersten Ende (50) und einem zweiten Ende (60) umfaßt, wobei der besagte Hebel (44) durch die Wand (13) des Gehäuses (10) hindurchgeht, **dadurch gekennzeichnet,** daß der Körper (46) des mechanischen Hebels (44) durch eine in der Wand des Gehäuses (10) ausgebildete längliche Öffnung (48) hindurchgeht, daß das zweite Ende (60) des mechanischen Hebels außen am Gehäuse vorsteht, um die axiale Beaufschlagung des Ausrücklagers (20) in einer zur ersten Richtung (F1) entgegengesetzten zweiten Richtung (F2) über den Kolben (26, 34) zu ermöglichen, so daß der besagte mechanische Hebel (44) ein Betätigungshebel ist.

2. Kupplung nach Anspruch 1, **dadurch gekennzeichnet,** daß das zweite Ende (60) für das Zusammenwirken mit einem Werkzeug (62) profiliert ist.

3. Kupplung nach Anspruch 1, **dadurch gekennzeichnet,** daß der Körper (46) des Hebels (44) durch die längliche Öffnung (48) des Gehäuses (10) mit Spiel in der axialen Richtung parallel zur axialen Verschiebungsachse (X-X) des Kolbens (26, 34) für die axiale Bewegung des Kolbens (26) und des Ausrücklagers (20) und mit einem geringeren Spiel in der anderen Richtung für die Drehsicherung des Kolbens (26) hindurchgeht.

4. Kupplung nach Anspruch 1,**dadurch gekennzeichnet,** daß die Gelenkachse (Y-Y) des Hebels (44) im Verhältnis zur Achse (X-X) des Kolbens (26, 34) radial versetzt ist.

5. Kupplung nach Anspruch 1, **dadurch gekennzeichnet,** daß das erste Ende (50) des Hebels in Form einer Gabel (50A, 50B) ausgeführt ist.

6. Kupplung nach Anspruch 1,**dadurch gekennzeichnet,** daß das erste Ende (50) des Hebels nur einen Arm umfaßt, der sich auf einer Seite des Kolbens (26) erstreckt.

7. Kupplung nach Anspruch 1,**dadurch gekennzeichnet,** daß die hydraulische Betätigungsvorrichtung einen Kreislauf für die Druckflüssigkeitszufuhr enthält, der wenigstens eine Zuleitung umfaßt, die die Betätigungskammer (38) des Kolbens (26, 34) mit einer außerhalb des Gehäuses (10) angeordneten Druckflüssigkeitsquelle verbindet, und daß wenigstens ein Teil (64A) der besagten Zuleitung im Körper (46) des Hebels (44) ausgebildet ist.

8. Kupplung nach Anspruch 7, **dadurch gekennzeichnet,**daß der Körper des Hebels einen Längskanal (64A) umfaßt, dessen erstes Ende (66A) mit der Betätigungskammer (38) des Kolbens (26, 34) über die Gelenkmittel (52A) zur Anlenkung des besagten ersten Endes (50A) des Hebels (44) am Kolben (26, 34) verbunden ist.

9. Kupplung nach Anspruch 8, **dadurch gekennzeichnet,** daß das zweite Ende (68A) des Kanals (64A) außerhalb des Kupplungsgehäuses (10) mündet.

10. Kupplung nach Anspruch 7, **dadurch gekennzeichnet,** daß der Zufuhrkreislauf eine Ablaßleitung (64B) umfaßt, von der wenigstens ein Teil im Körper (46) des Hebels (44) ausgebildet ist.

## Claims

1. A friction clutch of the pull-to-release type, especially for motor vehicles, comprising a clutch casing (10) inside which there is arranged a mechanism (20) for controlling the clutch, which comprises, firstly a clutch release bearing (20) and secondly an hydraulic actuating device (26, 34) comprising at least one actuating piston having one end which acts on the clutch release bearing (20) so as to urge the said bearing (20) axially in a first direction (F1), so as to give declutching when the hydraulic actuating device is supplied with fluid under pressure, and thirdly, a mechanical lever (44) with a body (46), a first end (50) which is coupled in axial straight line movement to the piston (26, 34) and articulated on the latter about an axis of articulation (Y-Y) at right angles to the axis (X-X) of axial sliding movement of the piston (26, 34), and a second end (60), the said lever (44) extending through the wall (13) of the casing (10), characterised in that the body (46) of the mechanical lever (44) extends through an oblong aperture (48) formed in the wall of the casing (10), and in that the second end (60) of the mechanical lever projects out of the casing so as to permit the clutch release bearing (20) to be urged axially in a second direction (F2) opposite to the first direction (F1) by means of the piston (26, 34), so that the said mechanical lever (44) is an actuating lever.

2. A clutch according to Claim 1, characterised in that the second end (60) is profiled for cooperation with a tool (62).

3. A clutch according to Claim 1, characterised in that the body (46) of the lever (44) extends through the oblong aperture (44) in the casing (10), with a clearance in the axial direction parallel to the axis (X-X) of axial sliding movement of the piston (26, 34), for axial displacement of the piston (26) and clutch release bearing (20), and with a clearance which is reduced in the other direction so as to prevent rotation of the piston (26).

4. A clutch according to Claim 1, characterised in that the articulation axis (Y-Y) of the lever (44) is offset radially with respect to the axis (X-X) of the piston (26, 34).

5. A clutch according to Claim 1, characterised in that the first end (50) of the lever is in the form of a fork (50A, 50B).

6. A clutch according to Claim 1, characterised in that the first end (50) of the lever comprises a single arm which extends on one side of the piston (26).

7. A clutch according to Claim 1, characterised in that the hydraulic actuating device includes a circuit for supplying fluid under pressure, comprising at least one feed duct which connects the actuating chamber (38) of the piston (26, 34) to a source of fluid under pressure which is arranged outside the casing (10), and in that at least a part (64A) of the said duct is formed within the body (46) of the lever (44).

8. A clutch according to Claim 7, characterised in that the body of the lever has a longitudinal duct (64A), of which a first end (66A) is connected to the actuating chamber (38) of the piston (26, 34) through means (52A) for articulating the said first end (50A) of the lever (44) on the piston (26, 34).

9. A clutch according to Claim 8, characterised in that the second end (68A) of the duct (64A) exhausts outside the clutch casing (10).

10. A clutch according to Claim 7, characterised in that the supply circuit includes a purge duct (64B), at least part of which is formed in the body (46) of the lever (44).
